(19) Europäisches Patentamt
European Patent Office
Office européen des brevets

(11) **EP 2 591 212 B1**

(12) **FASCICULE DE BREVET EUROPEEN**

(45) Date de publication et mention de la délivrance du brevet:
**25.05.2016 Bulletin 2016/21**

(21) Numéro de dépôt: **11743289.8**

(22) Date de dépôt: **04.07.2011**

(51) Int Cl.:
*F01D 21/02* *(2006.01)*    *G01M 15/14* *(2006.01)*
*F01D 17/02* *(2006.01)*    *F02C 9/16* *(2006.01)*
*F04D 27/00* *(2006.01)*

(86) Numéro de dépôt international:
**PCT/FR2011/051571**

(87) Numéro de publication internationale:
**WO 2012/004506 (12.01.2012 Gazette 2012/02)**

(54) **PROCÉDÉ ET DISPOSITIF DE DÉTECTION D'UN DÉCOLLEMENT TOURNANT AFFECTANT UN COMPRESSEUR DE TURBOMACHINE**

VERFAHREN UND VORRICHTUNG ZUM ERKENNEN EINER UMLAUFENDEN STRÖMUNGSABLÖSUNG BEI EINEM TURBOMASCHINENVERDICHTER

METHOD AND DEVICE FOR DETECTING A ROTATING STALL IN A COMPRESSOR OF A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **08.07.2010   FR 1055559**

(43) Date de publication de la demande:
**15.05.2013   Bulletin 2013/20**

(73) Titulaire: **Snecma**
**75015 Paris (FR)**

(72) Inventeur: **DJELASSI, Cédrik**
**F-91630 Marolles En Hurepoix (FR)**

(74) Mandataire: **Boura, Olivier et al**
**Cabinet Beau de Loménie**
**158, rue de l'Université**
**75340 Paris Cedex 07 (FR)**

(56) Documents cités:
**EP-A2- 0 418 189      FR-A1- 2 528 907**
**FR-A1- 2 645 909      US-A- 3 867 717**

**Description**

Arrière-plan de l'invention

La présente invention se rapporte au domaine général des turbomachines. Elle concerne plus particulièrement la détection d'un décollement tournant affectant un compresseur de turbomachine.

L'invention s'applique à tout type de turbomachines, et notamment aux turbomachines aéronautiques telles que les turboréacteurs, les turbopropulseurs, etc.

De façon connue, un décollement tournant est une instabilité aérodynamique affectant le compresseur et qui se caractérise par la présence d'une ou de plusieurs poches de fluide localisées (appelées cellules ou poches de décollement), se propageant dans la direction circonférentielle du compresseur, à une vitesse généralement inférieure à la vitesse de rotation du compresseur.

Cette instabilité induit, de façon générale, un affaiblissement des caractéristiques de compression et se manifeste notamment par une chute du rendement et du rapport de pression dans le compresseur. En outre, elle est responsable de phénomènes vibratoires importants qui peuvent induire une usure prématurée des aubages du compresseur.

On comprend donc aisément l'importance de pouvoir détecter rapidement et de manière fiable l'apparition d'un décollement tournant dans le compresseur d'une turbomachine.

Le document FR 2 645 909 décrit un procédé et un dispositif pour détecter des blocages non récupérables de moteurs à turbine à gaz.

Le document US 3 867 717 concerne un système de détection d'un décrochage d'un moteur à turbine à gaz, surveillant simultanément la pression de décharge du compresseur et la température de la turbine afin de limiter les fausses alarmes.

Le document FR 2 528 907 décrit un système d'avertissement du calage de la rotation des compresseurs de turbines à gaz.

Le document EP 0 418 189 concerne un système de détection et de récupération d'un décrochage affectant un compresseur d'une turbine à gaz.

Dans l'état actuel de la technique, de nombreuses méthodes sont proposées en vue de résoudre ce problème. Toutefois, pour la plupart, ces méthodes reposent :

-    soit sur des techniques de détection qui ne permettent pas de distinguer une situation de pompage d'une situation de décollement tournant. C'est le cas notamment de la méthode proposée dans le document US 4 581 888 ;
-    soit sur l'utilisation de capteurs coûteux et inhabituels sur les turbomachines, comme par exemple les capteurs de pression rapides et haute performance décrits dans le document US 6 871487.

Il existe donc un besoin d'une solution simple, rapide et fiable pour détecter un décollement tournant, qui s'appuie préférentiellement sur des capteurs déjà présents dans la turbomachine.

Objet et résumé de l'invention

L'invention répond à ce besoin en proposant un procédé de détection d'un décollement tournant affectant un compresseur d'une turbomachine, comprenant les étapes suivantes :

-    détection d'une accélération anormale de la turbomachine ou d'une ligne de fonctionnement du compresseur caractéristique d'une défaillance de la turbomachine ;
-    mémorisation d'une température de référence mesurée en sortie d'une turbine de la turbomachine à l'instant de la détection ;
-    comparaison, avec un seuil de température déterminé, d'une différence entre une température courante mesurée postérieurement à la détection, en sortie de la turbine, et la température de référence ; et
-    identification de la présence d'un décollement tournant en cas de dépassement du seuil.

Corrélativement, l'invention vise également un dispositif de détection d'un décollement tournant affectant un compresseur d'une turbomachine, comprenant :

-    des moyens de détection d'une accélération anormale de la turbomachine ou d'une ligne de fonctionnement du compresseur caractéristique d'une défaillance de la turbomachine ;
-    des moyens de mémorisation d'une température de référence mesurée en sortie d'une turbine de la turbomachine à l'instant de la détection ;
-    des moyens de comparaison, avec un seuil de température déterminé, d'une différence entre une température courante mesurée postérieurement à la détection en sortie de la turbine et la température de référence ; et

- des moyens d'identification de la présence d'un décollement tournant en cas de dépassement du seuil.

L'invention envisage donc, pour détecter un décollement tournant affectant un compresseur d'une turbomachine, de surveiller l'augmentation de la température en sortie de la turbine de cette turbomachine à partir d'un instant particulier. Cet instant correspond au moment où l'on détecte soit une accélération anormale ou une chute anormale de régime de la turbomachine, soit une ligne de fonctionnement du compresseur caractéristique d'une défaillance de la turbomachine.

En d'autres mots, l'invention propose avantageusement de combiner plusieurs indicateurs relatifs au comportement de la turbomachine en présence d'un décollement tournant (aussi appelés signatures comportementales), tels que notamment un niveau élevé et une augmentation de la température en sortie de la turbine, une accélération anormale de la turbomachine, une ligne de fonctionnement anormale du compresseur, afin d'identifier de façon fiable la présence d'un décollement tournant dans le compresseur.

En conséquence, l'invention propose une technique de détection simple, basée sur l'utilisation de capteurs classiquement utilisés lors de la surveillance de turbomachines (capteur de température, capteur de vitesse), ce qui la rend particulièrement facile à mettre en oeuvre. Ainsi, par exemple, lorsque la turbomachine est un turboréacteur d'aéronef, il est possible d'embarquer le procédé et le dispositif de détection selon l'invention à bord de l'aéronef, ce qui représente un avantage notable.

Dans un mode particulier de réalisation, le procédé de détection comprend en outre les étapes suivantes :

- évaluation d'indicateurs parmi au moins :

  o un indicateur représentatif d'un dépassement d'une température limite en sortie de la turbine ;
  o un indicateur représentatif d'une détection d'un pompage du compresseur ; et
  o un indicateur représentatif d'une chute anormale de régime de la turbomachine ;

- évaluation d'au moins une combinaison pondérée de ces indicateurs ; et
- mise à jour du seuil de température en fonction de la valeur de cette combinaison.

Corrélativement, dans ce mode de réalisation, le dispositif de détection comprend en outre :

- des moyens d'évaluation d'indicateurs parmi au moins :

  o un indicateur représentatif d'un dépassement d'une température limite en sortie de la turbine ;
  o un indicateur représentatif d'une détection d'un pompage du compresseur ; et
  o un indicateur représentatif d'une chute anormale de régime de la turbomachine ;

- des moyens d'évaluation d'au moins une combinaison pondérée de ces indicateurs ; et
- des moyens de mise à jour du seuil de température en fonction de la valeur de cette combinaison.

L'utilisation de ces indicateurs permet :

- d'une part, d'accroître la fiabilité de la détection : on évite ainsi les fausses alarmes qui sont difficiles à gérer, car elles peuvent requérir une extinction et un rallumage de la turbomachine ;
- et d'autre part, d'accélérer la détection.

En effet, on notera qu'une connaissance précise de la température qui permettrait de diagnostiquer de façon sûre un décollement tournant dans un compresseur est impossible en pratique. L'invention vient avantageusement compenser cette imprécision en appliquant les principes de la logique floue à la détection d'un décollement tournant.

Ceci est effectué par l'intermédiaire notamment de la mise à jour du seuil de température utilisé pour la détection. Préférentiellement, celui-ci sera pris initialement suffisamment élevé pour éviter une fausse détection, puis abaissé conformément à l'invention, si d'autres indicateurs que l'augmentation de la température en sortie de la turbine laissent présager la présence d'un décollement tournant.

Ces indicateurs viennent donc en quelque sorte pondérer la détection réalisée sur la base de l'augmentation de la température en sortie de la turbine, et permettent de l'accélérer. On obtient ainsi une détection à la fois sûre et performante en termes de rapidité.

La ou les combinaisons pondérées évaluées dans ce mode de réalisation peuvent notamment résulter d'une logique combinatoire appliquée entre les indicateurs.

Par exemple, on peut considérer une combinaison pondérée résultant de l'application d'une fonction ET logique entre :

- l'indicateur représentatif d'un dépassement d'une température limite en sortie de la turbine ; et
- l'indicateur représentatif d'une détection d'un pompage du compresseur.

En variante, on peut considérer une combinaison pondérée résultant de l'application d'une fonction OU logique entre :

- l'indicateur représentatif d'un dépassement d'une température limite en sortie de la turbine ; et
- l'indicateur représentatif d'une chute anormale de régime de la turbomachine.

Bien entendu d'autres combinaisons pondérées peuvent être envisagées basées sur une logique combinatoire ou sur des facteurs de pondérations réels plutôt que binaires.

Dans un mode de réalisation particulier de l'invention, on détecte que la ligne de fonctionnement du compresseur est caractéristique d'une défaillance de la turbomachine en comparant le rapport de la pression mesurée en sortie d'une chambre de combustion de la turbomachine sur la pression totale en entrée d'une soufflante de la turbomachine, à un seuil prédéterminé dépendant du régime de rotation du compresseur.

Typiquement, un rapport de pressions inférieur au rapport de pressions représentatif d'un fonctionnement sain de la turbomachine peut être symptomatique d'un décollement tournant ou de l'extinction de la chambre de combustion de la turbomachine. La prise en compte d'autres signatures comportementales conformément à l'invention permettra de confirmer ou d'infirmer la présence d'un décollement tournant.

La comparaison du rapport de pressions à un seuil prédéterminé permet de détecter de façon précoce un décollement tournant, i.e., avant d'avoir l'opportunité de constater une stagnation ou un dévissage du régime de la turbomachine (c'est-à-dire une accélération anormale de la turbomachine). Ceci est d'autant plus avantageux que l'on se situe à bas régime. Une telle détection précoce permettra alors d'appliquer très rapidement des techniques de correction du décollement tournant et de ce fait d'éviter notamment un échec du démarrage de la turbomachine.

Dans un mode de réalisation de l'invention, lorsqu'on détecte une température courante inférieure à la température de référence, on prend cette température comme nouvelle température de référence.

Ceci permet de suivre de façon plus juste l'évolution de la température en sortie de la turbine.

Dans un autre mode de réalisation, le procédé selon l'invention comprend en outre une étape d'identification d'une phase de fonctionnement de la turbomachine, les étapes de détection, de mesure, de comparaison et d'identification étant mises en oeuvre si la phase de fonctionnement ainsi identifiée est :

- une phase de démarrage ou de redémarrage de la turbomachine ; ou
- une phase de régulation de poussée après un démarrage de la turbomachine.

En effet, c'est durant ces deux phases que la turbomachine est susceptible d'être affectée par un décollement tournant. L'identification de l'une ou l'autre de ces phases permet d'optimiser la recherche d'un décollement tournant et d'économiser des ressources de la turbomachine, en limitant l'exécution du procédé selon l'invention.

Selon un autre aspect, l'invention vise également une turbomachine comprenant un dispositif de détection conforme à l'invention.

Brève description des dessins et annexes

D'autres caractéristiques et avantages de la présente invention ressortiront de la description faite ci-dessous, en référence aux annexes et aux dessins qui en illustrent un exemple de réalisation dépourvu de tout caractère limitatif :

- la figure 1 représente, sous forme d'organigramme, les principales étapes d'un procédé de détection d'un décollement tournant selon l'invention, dans un mode particulier de réalisation ;
- la figure 2 représente un exemple de moyens de détection d'une ligne de fonctionnement du compresseur caractéristique d'une défaillance de la turbomachine ;
- la figure 3 représente les principales étapes mises en oeuvre lors de la mise à jour du seuil de température, conformément à l'invention, dans un mode particulier de réalisation ;
- la figure 4 représente un exemple de moyens permettant d'évaluer l'indicateur représentatif d'un dépassement d'une température limite en sortie de la turbine ;
- la figure 5 représente un exemple de moyens permettant d'évaluer l'indicateur représentatif d'une détection d'un pompage du compresseur ;

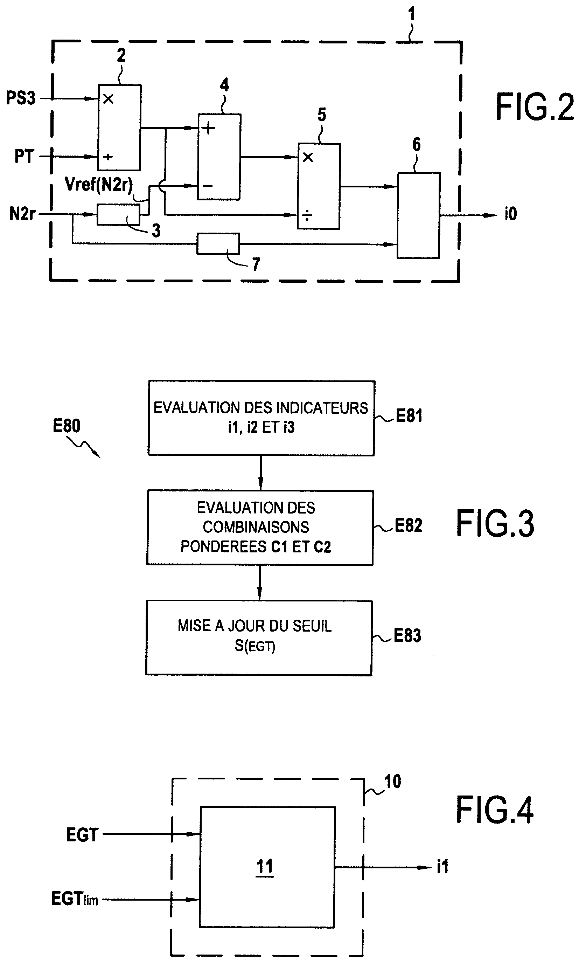

- la figure 6 représente un exemple de moyens permettant d'évaluer l'indicateur représentatif d'une chute anormale de régime de la turbomachine ;
- la figure 7 représente un exemple de moyens d'évaluation de combinaisons pondérées d'indicateurs ; et
- les annexes 1 et 2 illustrent des exemples de bases de données pouvant être utilisées par les moyens de détection représentés sur la figure 2 pour détecter une ligne de fonctionnement du compresseur caractéristique d'une défaillance de la turbomachine, dans un mode particulier de réalisation de l'invention.

Description détaillée d'un mode de réalisation

Comme mentionné précédemment, l'invention propose d'appliquer les principes de la logique floue à la détection d'un décollement tournant. Plus précisément, elle propose avantageusement de combiner plusieurs indicateurs ou signatures comportementales de la turbomachine associées au phénomène de décollement tournant, afin d'identifier de façon fiable sa présence dans le compresseur.

On entend ici par signature comportementale, un comportement caractéristique d'un paramètre de fonctionnement de la turbomachine (ex. régime de la turbomachine, température en sortie de la turbine, ligne de fonctionnement du compresseur, etc.), en présence d'un décollement tournant.

Dans le mode de réalisation décrit ici, on considère les indicateurs suivants :

- une stagnation ou une chute du régime de la turbomachine ;
- une augmentation de la température en sortie de la turbine de la turbomachine ;
- une chute du taux de compression (existence d'un pompage) ;
- une température élevée en sortie de la turbine de la turbomachine ; et
- une ligne de fonctionnement du compresseur caractéristique d'une défaillance de la turbomachine.

Par ligne de fonctionnement du compresseur, on entend ici l'évolution, en fonction du régime de rotation du compresseur, du rapport de la pression mesurée en sortie de la chambre de combustion de la turbomachine sur la pression totale mesurée en entrée de la soufflante de la turbomachine. Cette ligne de fonctionnement est connue de l'homme du métier et dépend de la turbomachine considérée.

L'existence de ces indicateurs laisse présager la présence d'un décollement tournant. Bien entendu, d'autres indicateurs en sus de ceux-ci pourraient être envisagés pour renforcer encore la fiabilité de la détection.

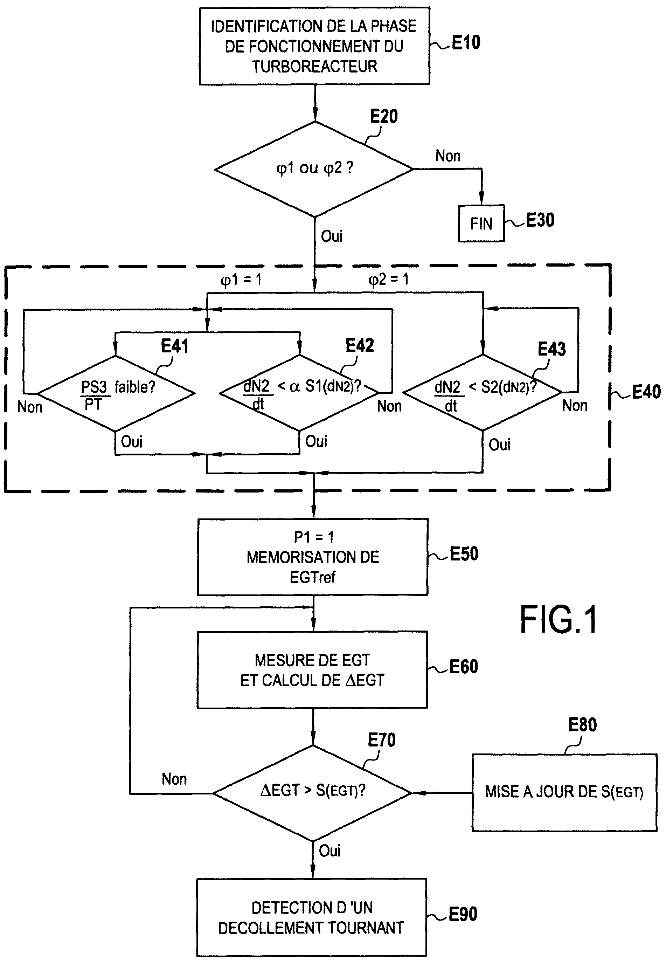

Nous allons maintenant décrire, en référence à la figure 1, les principales étapes du procédé de détection selon l'invention, dans un mode particulier de réalisation dans lequel le procédé est mis en oeuvre par la turbomachine.

Dans l'exemple décrit ici, on envisage la détection d'un décollement tournant affectant le compresseur haute pression d'un turboréacteur double-corps équipant un aéronef. Cette hypothèse n'est toutefois pas limitative, l'invention pouvant également être appliquée au compresseur basse pression, ainsi qu'à d'autres turbomachines.

De façon connue, un turboréacteur est susceptible de rencontrer une situation de décollement tournant lors de deux phases de fonctionnement distinctes du turboréacteur, à savoir :

- lors d'une phase φ1 de démarrage ou de rallumage du turboréacteur (turboréacteur en fonctionnement « sub-idle ») ; et/ou
- lors d'une phase φ2 de régulation de la poussée après démarrage (turboréacteur en fonctionnement « off-idle »).

Conformément au mode de réalisation décrit ici, le procédé de détection selon l'invention n'est mis en oeuvre que lorsque le turboréacteur se trouve dans l'une ou l'autre de ces deux phases (i.e. φ1=1 ou φ2=1), et ce, afin de préserver les ressources de l'aéronef.

Ainsi, dans un premier temps, on identifie la phase de fonctionnement du turboréacteur (étape E10). Plus précisément, on cherche à déterminer si le turboréacteur se trouve dans l'une des phases φ1 ou φ2.

De façon connue, les phases φ1 et φ2 de fonctionnement du turboréacteur peuvent être aisément établies :

- en analysant les commandes de démarrage du turboréacteur, qui indiquent si celui-ci est dans la phase φ1 de démarrage/rallumage ;
- en interrogeant les réseaux correcteurs d'accélération du turboréacteur, qui sont sollicités lorsque le turboréacteur se trouve dans la phase φ2.

Si le turboréacteur ne se trouve ni dans la phase de fonctionnement φ1 ni dans la phase de fonctionnement φ2 (φ1=φ2=FAUX=0) (étape E20), on considère que le compresseur n'est pas susceptible d'être affecté par un décollement tournant. Le procédé de détection prend alors fin (étape E30).

En revanche, si le turboréacteur se trouve dans la phase de fonctionnement φ1 ou dans la phase de fonction-

nement φ2 (φ1=VRAI=1 ou φ2=VRAI=1) (étape E20), son régime est examiné afin de détecter, le cas échéant, une accélération anormale du turboréacteur ou une ligne de fonctionnement du compresseur caractéristique d'une défaillance du turboréacteur (étape E40).

Une anomalie dans la ligne de fonctionnement du compresseur haute pression constitue une signature comportementale symptomatique d'un décollement tournant qui apparaît très tôt dans le fonctionnement du turboréacteur pendant la phase φ1, i.e. peu après le démarrage du turboréacteur et à régime réduit, avant même qu'on ne soit en mesure de détecter une accélération anormale du turboréacteur.

En effet, suite au démarrage du turboréacteur, du fait du fonctionnement sur le démarreur, l'enroulement du moteur peut être normal alors qu'un décollement tournant peut exister sur le moteur (i.e. pas de stagnation d'accélération constatée jusqu'à un certain régime). En revanche, durant cette période, il est possible de distinguer, lorsque le compresseur a atteint un certain régime de rotation, une ligne de fonctionnement du compresseur caractéristique d'une défaillance du turboréacteur d'une ligne de fonctionnement normale, et ce, en observant le rapport de la pression mesurée en sortie de la chambre de combustion du turboréacteur sur la pression totale mesurée en entrée de la soufflante.

L'observation de ce rapport de pressions et de la ligne de fonctionnement du compresseur haute pression pendant cette période permet avantageusement d'activer sans tarder la surveillance des autres signatures comportementales, et typiquement de la température en sortie de la turbine du turboréacteur.

Comme mentionné précédemment, pour détecter une ligne de fonctionnement du compresseur caractéristique d'une défaillance de la turbomachine, on s'intéresse ici au rapport de la pression statique PS3 mesurée en sortie de la chambre de combustion du turboréacteur sur la pression totale PT mesurée en entrée de la soufflante. La pression statique PS3 et la pression PT sont mesurées à l'aide de capteurs de pression connus de l'homme du métier, non détaillés ici.

La figure 2 représente un exemple de moyens de détection 1 d'une ligne de fonctionnement du compresseur caractéristique d'une défaillance du turboréacteur, pouvant être mis en oeuvre dans le cadre de l'invention. Ces moyens de détection ne sont mis en oeuvre ici que lorsque l'on détecte que le turboréacteur est allumé (lorsque le turboréacteur est éteint, le phénomène de décollement tournant est inexistant), et que le compresseur haute pression a atteint un régime de rotation prédéterminé à partir duquel on peut distinguer un fonctionnement sain d'un fonctionnement défaillant du turboréacteur. La détermination de ce régime de rotation peut être réalisée de façon expérimentale et ne pose aucune difficulté à l'homme du métier.

Selon l'exemple de la figure 2, on compare le rapport de la pression PS3 sur la pression PT, éventuellement à différents instants d'échantillonnage, avec un seuil déterminé en fonction du régime de rotation N2 du compresseur réduit par sa température d'entrée T25, noté N2r, i.e. :

$$N2r = \frac{N2}{\sqrt{T25/288.15}}$$

Cette comparaison est effectuée ici en relatif.

Plus précisément, les mesures des pressions PS3 et PT sont fournies en entrée d'un élément diviseur 2, apte à calculer le rapport PS3/PT.

En parallèle de ce traitement, on fournit, en entrée d'un premier modèle numérique 3, une estimation du régime de rotation réduit N2r du compresseur. On notera que le régime de rotation réduit N2r est un paramètre de fonctionnement classiquement utilisé dans la surveillance des turboréacteurs. Les techniques d'obtention de ce paramètre sont de ce fait connues de l'homme du métier et ne seront pas décrites plus en détails ici.

Le premier modèle numérique 3 est ici une base de données (ex. une table), qui associe à diverses valeurs de régime réduit N2r une valeur de référence du rapport de pressions (PS3/PT), notée Vref(N2r). Par base de données, on entend ici au sens large un ensemble de données qui peut se présenter sous diverses formes, comme par exemple sous la forme d'un tableau.

La valeur de référence Vref(N2r) donne une estimation du rapport de pressions PS3/PT pour un régime de rotation réduit N2r en deçà duquel le fonctionnement du turboréacteur considéré se distingue du fonctionnement d'un turboréacteur sain. Autrement dit, elle caractérise la valeur limite du rapport de pressions PS3/PT pour lequel on considère que le turboréacteur fonctionne de façon saine. Ainsi, en deçà de la ligne de fonctionnement définie par les différentes valeurs de référence en fonction du régime N2r (à une marge près), on considèrera que le turboréacteur présente une défaillance (ex. décollement tournant, extinction de la chambre de combustion, etc.).

Cette ligne de fonctionnement (i.e. les valeurs de référence Vref(N2r)) est obtenue de manière expérimentale, à partir d'une cartographie de turboréacteurs sains et de turboréacteurs présentant des défaillances telles qu'un décollement tournant.

A titre illustratif, l'annexe 1 donne, sous la forme d'un tableau, des exemples de valeurs du rapport de pressions PS3/PT en fonction du régime de rotation réduit N2r, pour un moteur non sain. Ces valeurs peuvent être utilisées comme valeurs de référence et définissent une ligne de fonctionnement au sens de l'invention. Le tableau représenté en annexe 1 constitue ainsi une base de données pouvant être utilisée comme premier modèle numérique.

La valeur de référence Vref(N2r) issue du premier modèle numérique 3 est alors soustraite par un élément soustracteur 4 du rapport PS3/PT précédemment calculé.

La sortie de l'élément soustracteur 4 et le rapport PS3/PT calculé par l'élément diviseur 2 sont ensuite fournies en entrée d'un élément diviseur 5. Celui-ci évalue alors le rapport λ défini par :

$$\lambda = \frac{\left(\dfrac{PS3}{PT}\right) - Vref(N2r)}{\left(\dfrac{PS3}{PT}\right)}$$

Le rapport λ est ensuite comparé par un comparateur 6 à un seuil prédéterminé S0(N2r) en vue de détecter un rapport de pression anormalement faible. Le seuil S0(N2r) est fourni par un second modèle numérique 7, en fonction du régime de rotation réduit N2r.

Le second modèle numérique 7 est ici une base de données (ex. une table), qui associe à diverses valeurs de régime réduit N2r un seuil S0(N2r), représentatif de la marge que l'on s'autorise par rapport à la ligne de fonctionnement sain du compresseur haute pression discutée précédemment avant de considérer qu'une défaillance, telle qu'un décollement tournant, affecte le compresseur et donc le turboréacteur. Cette marge est définie de manière empirique.

A titre illustratif, **l'annexe 2** donne, sous la forme d'un tableau, un exemple de base de données pouvant être utilisée comme second modèle numérique.

Si le rapport λ est inférieur au seuil S0(N2r), le comparateur délivre un 1 logique (sinon il délivre un 0 logique), indiquant qu'une ligne de fonctionnement du compresseur caractéristique d'une défaillance du turboréacteur a été détectée. Le cas échéant, un indicateur P1 est alors activé (étape E50). P1 est par exemple un bit positionné à 1 lorsqu'il est activé, et à 0 sinon.

Si le rapport λ est supérieur au seuil S0(N2r), on continue d'examiner la ligne de fonctionnement du compresseur haute pression (i.e. le rapport PS3/PT) durant toute la phase φ1 en vue de détecter éventuellement une ligne de fonctionnement caractéristique d'une défaillance du turboréacteur.

En variante, la comparaison du rapport (PS3/PT) à un seuil prédéterminé peut être réalisée en absolue, i.e., on compare directement le rapport (PS3/PT) à un seuil.

L'accélération anormale du turboréacteur est un autre indicateur de la présence d'un décollement tournant. En effet, en présence d'un décollement tournant, la pression d'alimentation de la turbine chute, ce qui la conduit à réduire le couple moteur. Le taux d'accélération du régime du turboréacteur diminue alors anormalement, de façon plus ou moins notable en fonction de l'intensité du décollement tournant.

L'accélération du turboréacteur peut être évaluée à partir de la dérivée de la vitesse de rotation N2 de l'arbre du compresseur haute pression du turboréacteur. On notera toutefois qu'une accélération anormale du turboréacteur se traduit de façon différente selon que le turboréacteur se trouve dans la phase φ1 ou dans la phase φ2.

Ainsi, de façon connue, lorsque le turboréacteur se trouve dans la phase φ1 de démarrage ou de rallumage, le régime du turboréacteur (et donc la vitesse de rotation N2) est contrôlé par une boucle d'asservissement, à laquelle on associe un seuil d'accélération minimale (i.e. consigne minimale d'accélération), noté S1(dN2).

Pour détecter une accélération anormale du turboréacteur durant la phase φ1, on détermine si la dérivée de la vitesse de rotation par rapport au temps t (c'est-à-dire l'accélération), notée dN2/dt, descend significativement en dessous de la consigne minimale S1(dN2) (étape E42). Autrement dit, on examine si :

$$\frac{dN2}{dt} < \alpha \times S1(dN2),$$

où α désigne un coefficient réel caractérisant une descente « significative » en dessous du seuil S1(dN2). Par exemple si l'on choisit α=0.6, une accélération anormale sera détectée si l'accélération du turboréacteur est inférieure d'au moins 40% à l'accélération minimale attendue.

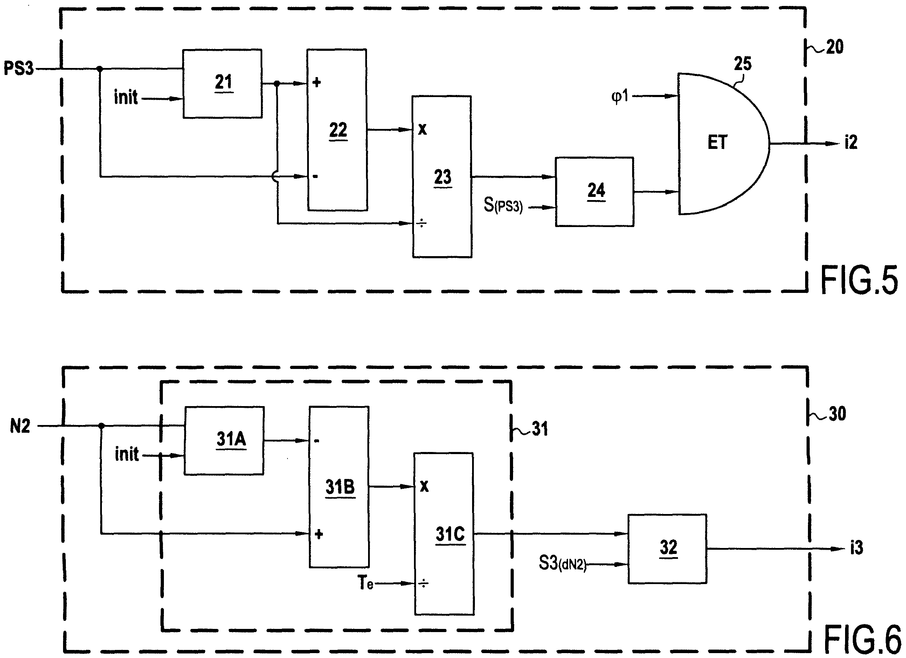

Le calcul de la dérivée dN2/dt est connu et détaillé à la figure 6, décrite ultérieurement.

Si une accélération anormale est détectée, l'indicateur P1 est activé (étape E50). P1 est par exemple un bit positionné à 1 si une accélération anormale est détectée, et à 0 sinon.

Sinon, on continue d'examiner l'accélération du turboréacteur durant toute la phase φ1 en vue de détecter éventuellement une accélération anormale.

La phase φ2 est une phase d'accélération qui requiert beaucoup de puissance de la turbine. Lorsqu'un décollement tournant apparaît durant cette phase, on assiste systématiquement à un « dévissage » du turboréacteur. Par dévissage, on entend ici une chute anormale du régime moteur du turboréacteur. Une accélération anormale du turboréacteur durant la phase φ2 se traduira donc par une accélération négative.

Ainsi, pour détecter une accélération anormale du turboréacteur durant la phase φ2, on détermine si la dérivée de la vitesse de rotation par rapport au temps t, dN2/dt, est négative (étape E43). Autrement dit, on examine si :

$$\frac{dN2}{dt} < S2(dN2) \leq 0$$

S2(dN2) désignant un seuil prédéterminé.

Si une accélération anormale est détectée, indicateurs P1 est activé (étape E50).

Sinon, on continue d'examiner l'accélération du turboréacteur durant toute la phase φ2 en vue de détecter une chute anormale du régime du turboréacteur.

L'activation de l'indicateur P1 déclenche, au même instant ou quasiment, la mémorisation de la température en sortie de la turbine du turboréacteur en fonctionnement, par exemple dans une mémoire vive du turboréacteur. Cette température, aussi connue sous le nom de température EGT (Exhaust Gaz Turbine), est un paramètre classiquement mesuré et suivi au cours de la mission de l'aéronef, par des capteurs connus de l'homme du métier et non détaillés ici. On notera $EGT_{ref}$ la température ainsi mémorisée. Cette température constitue une température de référence au sens de l'invention.

Dès lors, conformément au procédé de détection selon l'invention, on analyse l'évolution de la température mesurée en sortie de la turbine du turboréacteur (notée EGT), par rapport à la température de référence $EGT_{ref}$. On notera que si durant cette analyse, on détecte une température courante EGT inférieure à la température de référence $EGT_{ref}$, alors cette température courante sera prise comme nouvelle température de référence.

Pour chaque mesure de température EGT, on évalue la différence, notée ΔEGT, entre cette température EGT et la température de référence $EGT_{ref}$ (étape E60).

La différence ΔEGT est alors comparée à un seuil S(EGT) déterminé (étape E70).

Dans l'exemple décrit ici, ce seuil est choisi initialement suffisamment grand pour permettre de détecter un décollement tournant sans risque de fausse détection. Il est déterminé de façon expérimental et dépend du régime de rotation N2r du compresseur haute pression. Il sera ensuite mis à jour au cours du procédé de détection selon l'invention (étape E80), pour accélérer la détection de décollement tournant comme détaillé ultérieurement en référence à la figure 3.

Si la différence ΔEGT est supérieure au seuil S(EGT), alors un décollement tournant est détecté (étape E90). Suite à cette détection, un message d'alerte peut être envoyé, par exemple au pilote de l'aéronef, afin de lui signaler la présence du décollement tournant. Ce dernier pourra éventuellement, en réponse, adapter le régime du turboréacteur.

Si la différence ΔEGT est inférieure au seuil S(EGT), les étapes E60 et E70 sont alors reproduites pour une autre mesure EGT de la température.

Comme mentionné précédemment, dans le mode de réalisation décrit ici, pour améliorer les performances de la détection en termes de rapidité tout en garantissant un faible taux de fausse détection, le seuil S(EGT) est mis à jour (i.e. abaissé) lorsque des indicateurs autres qu'une augmentation importante de la température EGT laissent présager la présence d'un décollement tournant. Pour ce faire, l'invention utilise avantageusement les principes de la logique floue.

De façon connue, la logique floue s'appuie sur la théorie mathématique des ensembles flous (c'est-à-dire définis de façon imprécise), et permet de définir une appartenance « graduelle » (i.e. plus ou moins forte) d'un élément à une classe. Elle s'applique particulièrement bien aux domaines dans lesquels on ne possède pas de modèle mathématique ni de connaissance précise des phénomènes que l'on cherche à surveiller ou à contrôler.

Les inventeurs ont astucieusement eu l'idée d'appliquer ce principe de logique floue à la détection d'un décollement tournant, pour la mise à jour du seuil S(EGT), comme décrit maintenant en référence à la **figure 3.**

Dans l'exemple décrit ici, pour décider de la mise à jour du seuil S(EGT), on évalue les trois indicateurs suivants (étape E81) :

- un indicateur i1 représentatif d'un dépassement d'une température limite $EGT_{lim}$ en sortie de la turbine ;
- un indicateur i2 représentatif d'une détection d'un pompage du compresseur ; et
- un indicateur i3 représentatif d'un dévissage du turboréacteur, autrement dit d'une chute anormale de son régime.

Les indicateurs i1, i2, i3 sont par exemple des bits, positionnés à 1 lorsqu'ils sont activés, et à 0 sinon. Ainsi, i2=1 signifie qu'un pompage du compresseur a été détecté.

Les **figures 4, 5 et 6** représentent des moyens adaptés à évaluer ces indicateurs.

La figure 4 représente des moyens 10 adaptés à évaluer l'indicateur i1. Ces moyens comprennent un comparateur 11, apte à comparer chaque mesure EGT de la température en sortie de turbine du turboréacteur, avec la température limite $EGT_{lim}$.

Si $EGT > EGT_{lim}$, alors le comparateur 11 active l'indicateur i1 (i1=1). Sinon, l'indicateur i1 est désactivé (i1=0).

La figure 5 représente des moyens 20 adaptés à évaluer l'indicateur i2, autrement dit, à détecter la présence (ou l'absence) d'un pompage du turboréacteur. Dans l'exemple décrit ici, on se limite à un pompage « sub-idle », c'est-à-dire qui apparaît lorsque le turboréacteur se trouve dans un mode de fonctionnement « sub-idle » ($\varphi$1=1). En effet, durant ce mode de fonctionnement, un pompage est presque toujours suivi d'un décollement tournant, ce qui rend d'autant plus pertinent l'indicateur i2 durant la phase $\varphi$1 de démarrage.

De façon connue, un pompage est une instabilité aérodynamique de l'écoulement de fluide au travers du compresseur, qui peut s'accompagner d'une inversion du débit dans le compresseur. L'existence d'un pompage se traduit notamment par une chute du taux de compression du turboréacteur.

Pour détecter cette chute du taux de compression, les moyens 20 utilisent la pression statique PS3 mesurée en sortie de la chambre de combustion du turboréacteur à différents instants.

A partir de la pression PS3 obtenue à un instant $nT_e$, $T_e$ désignant la période d'échantillonnage et n un entier relatif, les moyens 20 évaluent, par l'intermédiaire d'une cellule de retard 21, la pression PS3 à un instant $(n-1)T_e$.

Puis un élément soustracteur 22 calcule le différentiel de pression dPS3 donné par :

$$dPS3 = PS3[(n-1)T_e]-PS3[nT_e]$$

où $PS3[nT_e]$ désigne la valeur de la pression PS3 échantillonnée à l'instant nTe.

Un élément diviseur 23 divise alors le différentiel dPS3 par la valeur de la pression PS3 à l'instant $(n-1)T_e$.

La sortie de l'élément diviseur 23, dPS3/PS3, est ensuite fournie à un comparateur 24. Celui-ci compare la valeur de dPS3/PS3 à un seuil S(PS3) prédéterminé, et émet un 1 en sortie si dPS3/PS3 > S(PS3), un 0 sinon.

Cette valeur de sortie est alors combinée à l'aide d'une porte ET logique 25 avec l'indicateur de phase $\varphi$1, pour donner l'indicateur i2. Ainsi, si la valeur de sortie et l'indicateur de phase $\varphi$1 sont chacun égaux à 1, l'indicateur i2 est activé (i2=1). Autrement dit, un pompage est détecté pendant la phase de fonctionnement « sub-idle » du turboréacteur. Sinon i2 est désactivé (i2=0).

La figure 6 représente des moyens 30 adaptés à évaluer l'indicateur i3, c'est-à-dire à détecter la présence (ou non) d'un dévissage du turboréacteur. Pour ce faire, les moyens 30 utilisent la vitesse N2 de rotation de l'arbre du compresseur haute pression, mentionnée précédemment.

Plus précisément, les moyens 30 comprennent un dérivateur 31, adapté à évaluer la dérivée par rapport au temps dN2/dt. Ce dérivateur 31 est par exemple le dérivateur utilisé précédemment pour déterminer une accélération anormale en phase $\varphi$2. Il s'agit ici d'un filtre d'ordre 1 comprenant :

- une cellule de retard 31A, délivrant la vitesse N2 à l'instant $(n-1)T_e$ ;
- un élément soustracteur 31B, permettant de soustraire à la vitesse N2 à l'instant $nT_e$, la vitesse N2 à l'instant $(n-1)T_e$ issue de la cellule 31A ;
- un élément diviseur 31C, adapté à diviser la différence obtenue en sortie de l'élément 31B par la période d'échantillonnage $T_e$.

La valeur de la dérivée dN2/dt est ensuite fournie en entrée d'un comparateur 32. Celui-ci compare la valeur de dN2/dt à un seuil S3(dN2) négatif prédéterminé, et active l'indicateur i3 si $dN2/dt \leq S3(dN2)$ (i3=1), le désactive sinon (i3=0).

En référence à la figure 3, les indicateurs i1, i2 et i3 ainsi évalués sont ensuite combinés (étape E82), selon des combinaisons pondérées prédéterminées. Dans l'exemple décrit ici, les combinaisons pondérées s'appuient sur une logique combinatoire. Toutefois en variante, on pourrait envisager d'autres types de pondérations, par exemple à l'aide de probabilités, etc.

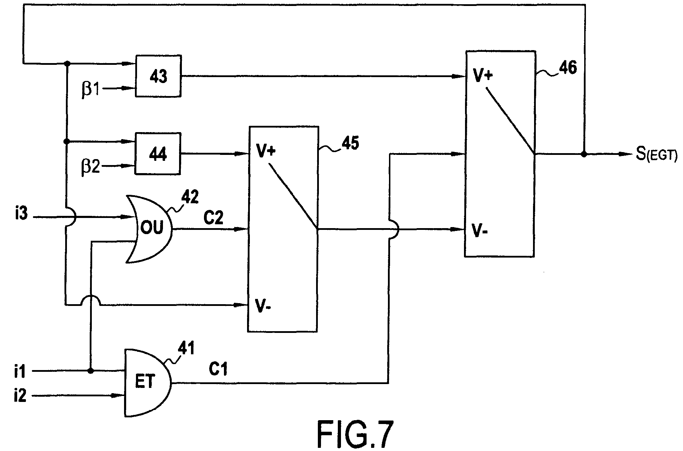

Un exemple d'évaluation de deux combinaisons C1 et C2 pondérées est représenté sur la **figure 7.** Selon cet exemple :

- la combinaison C1 est obtenue en appliquant une porte ET logique 41 entre les indicateurs i1 et i2.
- la combinaison C2 est obtenue en appliquant une porte OU logique 42 entre les indicateurs i1 et i3.

Les combinaisons pondérées ainsi évaluées sont ensuite utilisées pour décider de la mise à jour du seuil S(EGT) (étape E83), autrement dit pour réévaluer à la baisse le seuil S(EGT) si d'autres indicateurs d'un décollement tournant sont activés.

Dans l'exemple représenté sur la figure 6, les règles suivantes sont appliquées :

- <u>Si C1 = 1</u> : Le seuil S(EGT) est réduit d'un coefficient β1 (par exemple β1=85%) ;
- <u>Si C1 = 0 et C2=1</u> : Le seuil S(EGT) est réduit d'un coefficient β2 (par exemple β2=50%) ; et
- <u>Si C1 = 0 et C2=0</u> :

Le seuil S(EGT) est maintenu tel quel.

L'application des ces règles pour la réévaluation du seuil S(EGT) est mise en oeuvre à l'aide :

- des éléments multiplicateurs 43 et 44, adaptés respectivement à multiplier le seuil S(EGT) par les coefficients β1 et β2 ; et
- des éléments de décision (ou switch) 45 et 46, adaptés respectivement à sélectionner l'entrée V+ (i.e., la sortie des éléments multiplicateurs 43 et 44) lorsque C2=1, respectivement C1=1, et l'entrée V-, lorsque C2=0, respectivement C1=0.

Bien entendu, d'autres combinaisons pourraient être envisagées.

Le seuil S(EGT) ainsi mis à jour est alors utilisé pour détecter le décollement tournant au cours de l'étape E70, comme décrit précédemment. Ainsi, en présence d'autres signatures comportementales associées à un décollement tournant, la détection est accélérée.

ANNEXE 1

| N2r | 4000 | 5000 | 6000 | 7000 | 8000 | 9000 | 10000 | 11000 | 12000 |
|---|---|---|---|---|---|---|---|---|---|
| Vref(N2r) | 1.04 | 1.12 | 1.2 | 1.28 | 1.35 | 1.45 | 1.55 | 1.7 | 1.95 |

ANNEXE 2

| N2r | 5000 | 6000 | 7000 | 8000 | 9000 | 10000 | 11000 | 12000 |
|---|---|---|---|---|---|---|---|---|
| S0(N2r) | 0.025 | 0.04 | 0.06 | 0.11 | 0.11 | 0.11 | 0.11 | 0.11 |

**Revendications**

1. Procédé de détection d'un décollement tournant affectant un compresseur d'une turbomachine, **caractérisé en ce qu'**il comprend les étapes suivantes :

   - détection (E40) d'une accélération anormale de la turbomachine ou d'une ligne de fonctionnement du compresseur caractéristique d'une défaillance de la turbomachine, ladite ligne de fonctionnement correspondant à une évolution d'un rapport d'une pression mesurée en sortie d'une chambre de combustion de la turbomachine sur une pression totale mesurée en entrée d'une soufflante de la turbomachine en fonction d'un régime de rotation du compresseur ;
   - mémorisation (E50) d'une température de référence ($EGT_{ref}$) mesurée en sortie d'une turbine de la turbomachine à l'instant de la détection ;
   - comparaison (E60) avec un seuil de température déterminé ($S_{EGT}$), d'une différence entre une température courante (EGT) mesurée postérieurement à la détection, en sortie de la turbine, et la température de référence ($EGT_{ref}$) ; et
   - identification (E70) de la présence d'un décollement tournant en cas de dépassement du seuil.

2. Procédé de détection selon la revendication 1, **caractérisé en ce qu'**il comprend en outre les étapes suivantes :

   - évaluation (E81) d'indicateurs parmi au moins :

     o un indicateur (i1) représentatif d'un dépassement d'une température limite ($EGT_{lim}$) en sortie de la turbine ;
     o un indicateur (i2) représentatif d'une détection d'un pompage du compresseur ; et
     o un indicateur (i3) représentatif d'une chute anormale de régime de la turbomachine ;

- évaluation (E82) d'au moins une combinaison pondérée (C1,C2) de ces indicateurs ; et
- mise à jour (E83) du seuil de température en fonction de la valeur de cette combinaison.

**3.** Procédé de détection selon la revendication 1 ou 2, **caractérisé en ce qu'**on détecte (E41) que la ligne de fonctionnement du compresseur est caractéristique d'une défaillance de la turbomachine en comparant le rapport de la pression en sortie d'une chambre de combustion de la turbomachine sur la pression totale en entrée d'une soufflante de la turbomachine par rapport à un seuil prédéterminé dépendant du régime de rotation du compresseur.

**4.** Procédé de détection selon l'une quelconque des revendications 1 à 3, **caractérisé en ce que** lorsqu'on détecte une température courante inférieure à la température de référence, on prend cette température comme nouvelle température de référence.

**5.** Procédé de détection selon l'une quelconque des revendications 1 à 4, **caractérisé en ce qu'**il comprend en outre une identification (E10) d'une phase de fonctionnement de la turbomachine, les étapes de détection, de mesure, de comparaison et d'identification étant mises en oeuvre si la phase de fonctionnement ainsi identifiée est :

- une phase ($\varphi$1) de démarrage ou de redémarrage de la turbomachine ; ou
- une phase ($\varphi$2) de régulation de poussée après un démarrage de la turbomachine.

**6.** Procédé de détection selon la revendication 2, **caractérisé en ce que** la ou les combinaisons pondérées évaluées (C1,C2) résultent d'une logique combinatoire appliquée entre les indicateurs (i1,i2,i3).

**7.** Procédé de détection selon la revendication 6, **caractérisé en ce qu'**une combinaison pondérée évaluée (C1) résulte de l'application d'une fonction ET logique entre :

- l'indicateur (i1) représentatif d'un dépassement d'une température limite en sortie de la turbine ; et
- l'indicateur (i2) représentatif d'une détection d'un pompage du compresseur.

**8.** Procédé de détection selon la revendication 6 ou 7, **caractérisé en ce qu'**une combinaison pondérée évaluée (C2) résulte de l'application d'une fonction OU logique entre :

- l'indicateur (i1) représentatif d'un dépassement d'une température limite en sortie de la turbine ; et
- l'indicateur (i3) représentatif d'une chute anormale de régime de la turbomachine.

**9.** Dispositif de détection d'un décollement tournant affectant un compresseur d'une turbomachine, **caractérisé en ce qu'**il comprend :

- des moyens de détection d'une accélération anormale de la turbomachine ou d'une ligne de fonctionnement du compresseur caractéristique d'une défaillance de la turbomachine, ladite ligne de fonctionnement correspondant à une évolution d'un rapport d'une pression mesurée en sortie d'une chambre de combustion de la turbomachine sur une pression totale mesurée en entrée d'une soufflante de la turbomachine en fonction d'un régime de rotation du compresseur ;
- des moyens de mémorisation d'une température de référence ($EGT_{ref}$) mesurée en sortie d'une turbine de la turbomachine à l'instant de la détection ;
- des moyens de comparaison avec un seuil de température déterminé ($S_{EGT}$), d'une différence entre une température courante mesurée postérieurement à la détection en sortie de la turbine et la température de référence ; et
- des moyens d'identification de la présence d'un décollement tournant en cas de dépassement du seuil.

**10.** Dispositif de détection selon la revendication 9, **caractérisé en ce qu'**il comprend en outre :

- des moyens d'évaluation (10,20,30) d'indicateurs parmi au moins :

  o un indicateur représentatif d'un dépassement d'une température limite en sortie de la turbine ;
  o un indicateur représentatif d'une détection d'un pompage du compresseur ; et
  o un indicateur représentatif d'une chute anormale de régime de la turbomachine ;

- des moyens d'évaluation (40) d'au moins une combinaison pondérée de ces indicateurs ; et

- des moyens de mise à jour (45,46) du seuil de température en fonction de la valeur de cette combinaison.

11. Turbomachine comprenant un dispositif de détection selon la revendication 9 ou 10.

**Patentansprüche**

1. Verfahren zur Erfassung einer umlaufenden Ablösung, die einen Verdichter einer Turbomaschine beeinträchtigt, **dadurch gekennzeichnet, dass** es die folgenden Schritte umfasst:

- Erfassen (E40) einer anormalen Beschleunigung der Turbomaschine oder einer Kennlinie des Verdichters, die für einen Ausfall der Turbomaschine kennzeichnend ist, wobei die Kennlinie einer Entwicklung eines Verhältnisses eines am Ausgang einer Brennkammer der Turbomaschine gemessenen Drucks zu einem am Eingang eines Gebläses der Turbomaschine gemessenen Gesamtdruck in Abhängigkeit von einer Drehzahl des Verdichters entspricht,
- Speichern (E50) einer Referenztemperatur ($EGT_{ref}$), die am Ausgang einer Turbine der Turbomaschine zum Zeitpunkt der Erfassung gemessen wird,
- Vergleichen (E60) einer Differenz zwischen einer nach der Erfassung gemessenen aktuellen Temperatur (EGT) am Ausgang der Turbine und der Referenztemperatur ($EGT_{ref}$) mit einer bestimmten Temperaturschwelle ($S_{EGT}$), und
- Feststellen (E70) des Vorliegens einer umlaufenden Ablösung im Fall einer Überschreitung der Schwelle.

2. Erfassungsverfahren nach Anspruch 1, **dadurch gekennzeichnet, dass** es ferner die folgenden Schritte umfasst:

- Auswerten (E81) von Indikatoren aus wenigstens:

   ◦ einem Indikator (i1), der für ein Überschreiten einer Grenztemperatur ($EGT_{lim}$) am Ausgang der Turbine repräsentativ ist,
   ◦ einem Indikator (i2), der für eine Erfassung eines Pumpens des Verdichters repräsentativ ist, und
   ◦ einem Indikator (i3), der für einen anormalen Drehzahlabfall der Turbomaschine repräsentativ ist,

- Auswerten (E82) wenigstens einer gewichteten Kombination (C1, C2) aus diesen Indikatoren, und
- Aktualisieren (E83) der Temperaturschwelle in Abhängigkeit von dem Wert dieser Kombination.

3. Erfassungsverfahren nach Anspruch 1 oder 2, **dadurch gekennzeichnet, dass** erfasst wird (E41), dass die Kennlinie des Verdichters für einen Ausfall der Turbomaschine kennzeichnend ist, indem das Verhältnis des Drucks am Ausgang einer Brennkammer der Turbomaschine zu dem Gesamtdruck am Eingang eines Gebläses der Turbomaschine mit einer vorbestimmten, von der Drehzahl des Verdichters abhängigen Schwelle verglichen wird.

4. Erfassungsverfahren nach einem der Ansprüche 1 bis 3, **dadurch gekennzeichnet, dass** wenn eine aktuelle Temperatur erfasst wird, die unter der Referenztemperatur liegt, diese Temperatur als neue Referenztemperatur genommen wird.

5. Erfassungsverfahren nach einem der Ansprüche 1 bis 4, **dadurch gekennzeichnet, dass** es ferner ein Feststellen (E10) einer Betriebsphase der Turbomaschine umfasst, wobei die Erfassungs-, Mess-, Vergleichs- und Feststellungsschritte durchgeführt werden, wenn die so festgestellte Betriebsphase:

- eine Phase ($\varphi$1) eines Startens oder erneuten Startens der Turbomaschine ist oder
- eine Phase ($\varphi$2) einer Schubregelung nach einem Starten der Turbomaschine ist.

6. Erfassungsverfahren nach Anspruch 2, **dadurch gekennzeichnet, dass** die ausgewertete(n) gewichtete(n) Kombination oder Kombinationen (C1, C2) aus einer zwischen den Indikatoren (i1, i2, i3) angewandten Kombinationslogik hervorgehen.

7. Erfassungsverfahren nach Anspruch 6, **dadurch gekennzeichnet, dass** eine ausgewertete gewichtete Kombination (C1) aus der Anwendung einer logischen UND-Funktion zwischen:

- dem Indikator (i1), der für ein Überschreiten einer Grenztemperatur am Ausgang der Turbine repräsentativ ist, und

- dem Indikator (i2), der für eine Erfassung eines Pumpens des Verdichters repräsentativ ist, hervorgeht.

8. Erfassungsverfahren nach Anspruch 6 oder 7, **dadurch gekennzeichnet, dass** eine ausgewertete gewichtete Kombination (C2) aus der Anwendung einer logischen ODER-Funktion zwischen:

- dem Indikator (i1), der für ein Überschreiten einer Grenztemperatur am Ausgang der Turbine repräsentativ ist, und
- dem Indikator (i3), der für einen anormalen Drehzahlabfall der Turbomaschine repräsentativ ist, hervorgeht.

9. Vorrichtung zur Erfassung einer umlaufenden Ablösung, die einen Verdichter einer Turbomaschine beeinträchtigt, **dadurch gekennzeichnet, dass** sie umfasst:

- Mittel zum Erfassen einer anormalen Beschleunigung der Turbomaschine oder einer Kennlinie des Verdichters, die für einen Ausfall der Turbomaschine kennzeichnend ist, wobei die Kennlinie einer Entwicklung eines Verhältnisses eines am Ausgang einer Brennkammer der Turbomaschine gemessenen Drucks zu einem am Eingang eines Gebläses der Turbomaschine gemessenen Gesamtdruck in Abhängigkeit von einer Drehzahl des Verdichters entspricht,
- Mittel zum Speichern einer Referenztemperatur ($EGT_{ref}$), die am Ausgang einer Turbine der Turbomaschine zum Zeitpunkt der Erfassung gemessen wird,
- Mittel zum Vergleichen einer Differenz zwischen einer nach der Erfassung gemessenen aktuellen Temperatur am Ausgang der Turbine und der Referenztemperatur mit einer bestimmten Temperaturschwelle, und
- Mittel zum Feststellen des Vorliegens einer umlaufenden Ablösung im Fall einer Überschreitung der Schwelle.

10. Erfassungsvorrichtung nach Anspruch 9, **dadurch gekennzeichnet, dass** sie ferner umfasst:

- Mittel zum Auswerten (10, 20, 30) von Indikatoren aus wenigstens:

   ∘ einem Indikator, der für ein Überschreiten einer Grenztemperatur am Ausgang der Turbine repräsentativ ist,
   ∘ einem Indikator, der für eine Erfassung eines Pumpens des Verdichters repräsentativ ist, und
   ∘ einem Indikator, der für einen anormalen Drehzahlabfall der Turbomaschine repräsentativ ist,

- Mittel zum Auswerten (40) wenigstens einer gewichteten Kombination aus diesen Indikatoren und
- Mittel zum Aktualisieren (45, 46) der Temperaturschwelle in Abhängigkeit von dem Wert dieser Kombination.

11. Turbomaschine, die eine Erfassungsvorrichtung nach Anspruch 9 oder 10 umfasst.

**Claims**

1. A detection method for detecting a rotating stall affecting a compressor of a turbine engine, the method being **characterized in that** it comprises the following steps:

   d etecting (E40) an abnormal acceleration of the turbine engine or an operating line of the compressor that is characteristic of a failure of the turbine engine, said operating line corresponding to a variation of a ratio of a pressure measured at the outlet from a combustion chamber of the turbine engine over a total pressure measured at the inlet of a fan of the turbine engine as a function of a speed of rotation of the compressor;

   · storing (E50) a reference temperature ($EGT_{ref}$) measured at the outlet from a turbine of the turbine engine at the instant of detection;
   · comparing (E60) a determined temperature threshold ($S_{EGT}$) with a difference between a current temperature (EGT) at the outlet of the turbine as measured after detection and the reference temperature ($EGT_{ref}$); and
   · identifying (E70) that a rotating stall is present in the event of the threshold being exceeded.

2. A detection method according to claim 1, **characterized in that** it further comprises the following steps:

· evaluating (E81) indicators including at least:

· an indicator (i1) representative of a limit temperature ($EGT_{lim}$) being exceeded at the outlet from the turbine;
· an indicator (i2) representative of detecting compressor surging; and
· an indicator (i3) representative of an abnormal drop of speed of the turbine engine;

· evaluating (E82) at least one weighted combination (C1, C2) of these indicators; and
· updating (E83) the temperature threshold as a function of the value of the combination.

3. A detection method according to claim 1 or 2, **characterized in that** it is detected (E41) that the operating line of the compressor is characteristic of a failure of the turbine engine by comparing the ratio of the pressure at the outlet from a combustion chamber of the turbine engine over the total pressure at the inlet of a fan of the engine with a predetermined threshold depending on the speed of rotation of the compressor.

4. A detection method according to any one of claims 1 to 3, **characterized in that** when a current temperature is detected that is lower than the reference temperature, this temperature is taken as the new reference temperature.

5. A detection method according to any one of claims 1 to 4, **characterized in that** it further comprises identifying (E10) an operating stage of the turbine engine, with the detecting, measuring, comparing, and identifying steps being performed if the operating stage as identified in this way is:

· a stage ($\varphi$1) of starting or of re-starting the turbine engine; or
· a stage ($\varphi$2) of thrust regulation after the turbine engine has started.

6. A detection method according to claim 2, **characterized in that** the evaluated weighted combination(s) (C1, C2) is/are the result of combinatorial logic applied to the indicators (i1, i2, i3).

7. A detection method according to claim 6, **characterized in that** an evaluated weighted combination (C1) results from applying a logic AND function to:

· the indicator (i1) representative of exceeding a limit temperature at the outlet from the turbine; and
· the indicator (i2) representative of detecting surging of the compressor.

8. A detection method according to claim 6 or claim 7, **characterized in that** an evaluated weighted combination (C2) results from applying a logic OR function to:

· the indicator (i1) representative of exceeding a limit temperature at the outlet from the turbine; and
· the indicator (i3) representative of an abnormal drop in the speed of the turbine engine.

9. A detection device for detecting a rotating stall affecting a compressor of a turbine engine, the device being **characterized in that** it comprises:

· means for detecting an abnormal acceleration of the turbine engine or for detecting an operating line of the compressor that is characteristic of a failure of the turbine engine, said operating line corresponding to a variation of a ratio of a pressure measured at the outlet from a combustion chamber of the turbine engine over a total pressure measured at the inlet of a fan of the turbine engine as a function of a speed of rotation of the compressor;
· means for storing a reference temperature ($EGT_{ref}$) measured at the outlet of a turbine of the turbine engine at the instant of detection;
· means for comparing a determined temperature threshold ($S_{EGT}$) with the difference between a current temperature measured after the detection at the outlet of the turbine and the reference temperature; and
· means for identifying the presence of a rotating stall in the event of the threshold being exceeded.

10. A detection device according to claim 9, **characterized in that** it further comprises:

· means (10, 20, 30) for evaluating indicators from at least:

· an indicator representative of a limit temperature being exceeded at the outlet from the turbine;
· an indicator representative of detecting surging of the compressor; and

· an indicator representative of an abnormal drop in the speed of the turbine engine;

· means (40) for evaluating at least one weighted combination of the indicators; and
· means (45, 46) for updating the temperature threshold as a function of the value of the combination.

**11.** A turbine engine including a detection device according to claim 9 or claim 10.

FIG.1

FIG.2

PS3 →

PT →

Vref(N2r)

N2r →

×
+

2

+
−

4

×
÷

5

6

→ i0

3

7

1

EVALUATION DES INDICATEURS
i1, i2 ET i3

E81

EVALUATION DES
COMBINAISONS
PONDEREES C1 ET C2

E82

MISE A JOUR DU SEUIL
S(EGT)

E83

E80

FIG.3

EGT →

EGTlim →

11

10

→ i1

FIG.4

FIG.5

FIG.6

FIG.7

## RÉFÉRENCES CITÉES DANS LA DESCRIPTION

**Documents brevets cités dans la description**

- FR 2645909
- US 3867717 A
- FR 2528907
- EP 0418189 A
- US 4581888 A
- US 6871487 B